# EUROPEAN PATENT APPLICATION

(11) **EP 2 628 904 A2**
(43) Date of publication of application: **21.08.2013**
(21) Application number: 12198317.5
(22) Date of filing: 20.12.2012
(51) Int. Cl.: F01D 11/04, F01D 25/12, F02C 7/18

(54) **Turbine assembly and method for reducing fluid flow between turbine components**

(30) Priority: 04.01.2012 US 201213343134
(71) Applicant: General Electric Company, Schenectady, NY 12345 (US)
(72) Inventor: Babu, Ramesh Kempanna, 560066 Bangalore (IN); Srivasan, Karthik, 560066 Bangalore (IN)
(74) Representative: Cleary, Fidelma

(57) **Abstract**

According to one aspect of the invention, a turbine assembly (200) includes a stator having a base (222) and a rotor adjacent to the stator, the rotor having a base (206). The turbine assembly also includes a passage (212) formed in a projection (210) from the rotor base (206) to form a fluid curtain (308) between the rotor and stator, wherein the fluid curtain reduces a flow of fluid into a hot gas path.

## Description

### BACKGROUND OF THE INVENTION

The subject matter disclosed herein relates to gas turbines. More particularly, the subject matter relates to reducing fluid flow between components of gas turbines.

In a gas turbine, a combustor converts chemical energy of a fuel or an air-fuel mixture into thermal energy. The thermal energy is conveyed by a fluid, often compressed air from a compressor, to a turbine where the thermal energy is converted to mechanical energy. In some turbine embodiments, leakage of fluid between components into the compressed hot air causes a reduced power output and lower efficiency for the turbine. Leaks of fluid may be caused by thermal expansion of certain components and relative movement between components during operation of the gas turbine. Accordingly, reducing fluid leaks between components can improve efficiency and performance of the turbine.

### BRIEF DESCRIPTION OF THE INVENTION

According to one aspect of the invention, a turbine assembly includes a stator and a rotor adjacent to the stator. The turbine assembly also includes a passage formed in a projection from the rotor to form a fluid curtain between the rotor and stator, wherein the fluid curtain reduces a flow of fluid into a hot gas path.

According to another aspect of the invention, a method for reducing fluid flow between turbine components includes flowing a hot gas across a nozzle on a stator, flowing the hot gas across a bucket on a rotor adjacent to the stator and flowing a cooling air flow through inner portions of the stator and rotor. The method further includes forming a curtain of fluid between the stator and rotor to reduce leaking of the flow of cooling air into the flow of hot gas.

These and other advantages and features will become more apparent from the following description taken in conjunction with the drawings.

### BRIEF DESCRIPTION OF THE DRAWING

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic drawing of an embodiment of a gas turbine engine, including a combustor, fuel nozzle, compressor and turbine;
FIG. 2 is a side sectional view of a portion of an exemplary turbine assembly;
FIG. 3 is a detailed sectional view of the turbine assembly shown in FIG. 2;
FIG. 4 is a side sectional view of a portion of another exemplary turbine assembly; and
FIG. 5 is a side sectional view of a portion of yet another exemplary turbine assembly.

The detailed description explains embodiments of the invention, together with advantages and features, by way of example with reference to the drawings.

### DETAILED DESCRIPTION OF THE INVENTION

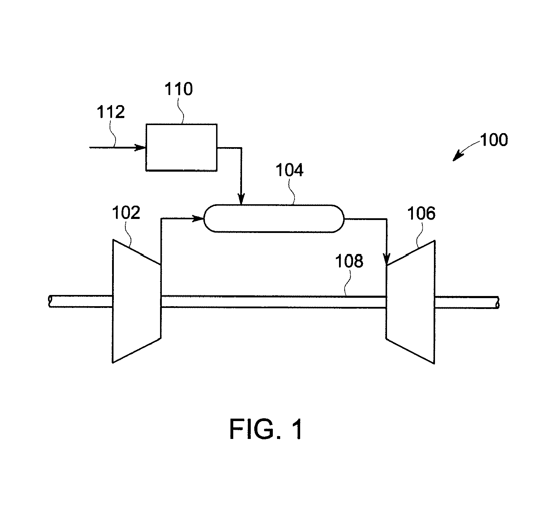

FIG. 1 is a schematic diagram of an embodiment of a gas turbine system 100. The system 100 includes a compressor 102, a combustor 104, a turbine 106, a shaft 108 and a fuel nozzle 110. In an embodiment, the system 100 may include a plurality of compressors 102, combustors 104, turbines 106, shafts 108 and fuel nozzles 110. The compressor 102 and turbine 106 are coupled by the shaft 108. The shaft 108 may be a single shaft or a plurality of shaft segments coupled together to form shaft 108.

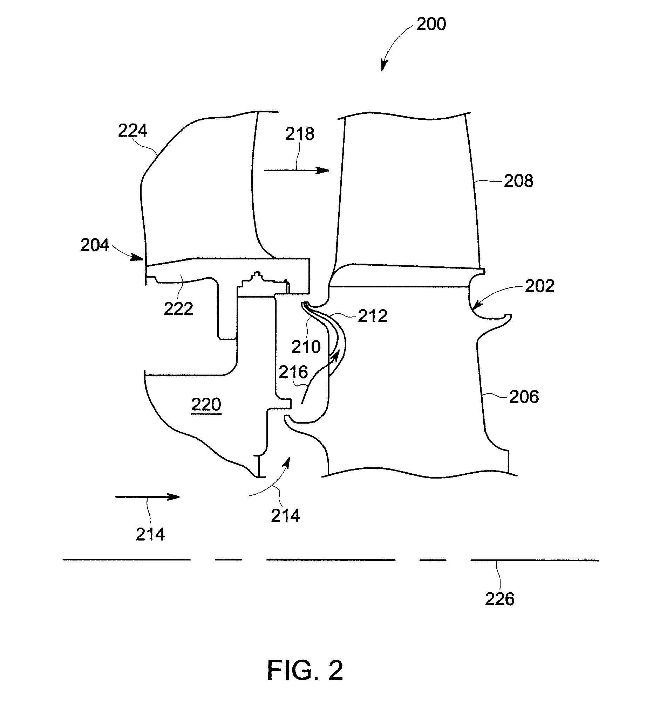

In an aspect, the combustor 104 uses liquid and/or gas fuel, such as natural gas or a hydrogen rich synthetic gas, to run the engine. For example, fuel nozzles 110 are in fluid communication with an air supply and a fuel supply 112. The fuel nozzles 110 create an air-fuel mixture, and discharge the air-fuel mixture into the combustor 104, thereby causing a combustion that heats a pressurized gas. The combustor 104 directs the hot pressurized exhaust gas through a transition piece into a turbine nozzle (or "stage one nozzle") and then a turbine bucket, causing turbine 106 rotation. The rotation of turbine 106 causes the shaft 108 to rotate, thereby compressing the air as it flows into the compressor 102. The turbine components or parts are configured to allow for thermal expansion and relative movement of the parts while hot gas flows through the turbine 106. By reducing flow of a fluid that is cooler than the hot gas, turbine efficiency is improved. Specifically, reducing leakage of fluid into the hot gas path or compressed gas flow increases the volume of hot gas flow along the desired path, enabling more work to be extracted from the hot gas. Methods, systems and arrangements to reduce fluid leakage between turbine parts, such as stators and rotors, are discussed in detail below with reference to FIGS. 2-5. The depicted arrangements provide a fluid curtain or seal to reduce fluid leakage into the hot gas flow, thereby increasing the work available to be extracted from the hot gas. Further, the fluid curtain is substantially lower maintenance as compared to other seals made of rubber and/or other material, which may wear out over time.

As used herein, "downstream" and "upstream" are terms that indicate a direction relative to the flow of working fluid through the turbine. As such, the term "downstream" refers to a direction that generally corresponds to the direction of the flow of working fluid, and the term "upstream" generally refers to the direction that is opposite of the direction of flow of working fluid. The term "radial" refers to movement or position perpendicular to an axis or center line. It may be useful to describe parts that are at differing radial positions with regard to an axis. In this case, if a first component resides closer to the axis than a second component, it may be stated herein that the first component is "radially inward" of the second component. If, on the other hand, the first component resides further from the axis than the second component, it may be stated herein that the first component is "radially outward" or "outboard" of the second component. The term "axial" refers to movement or position parallel to an axis. Finally, the term "circumferential" refers to movement or position around an axis. Although the following discussion primarily focuses on gas turbines, the concepts discussed are not limited to gas turbines.

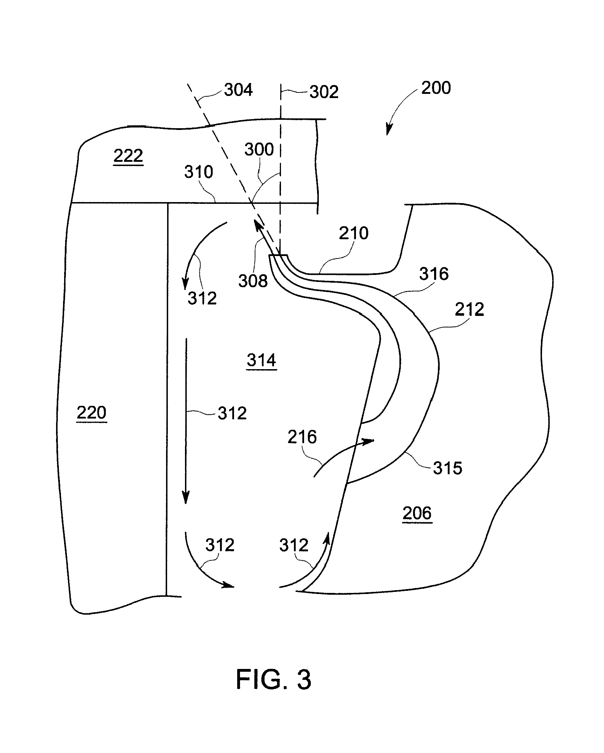

Referring now to FIG. 2, a side sectional view of a portion of an exemplary turbine assembly 200 is shown. In addition, FIG. 3 is a detailed sectional view of the turbine assembly 200. The turbine assembly 200 includes a rotor 202 and a stator 204 disposed about an axis 226. The rotor 202 includes a base 206 with an airfoil 208 (also referred to as a "bucket") extending from the base 206. A projection 210, such as an angel wing, extends from the base 206 (also referred to as a "rotor base"), wherein a passage 212 for flow of a fluid 216 is located within the projection 210. The projection 210 may be a member any geometry for flowing a fluid to create a fluid curtain between turbine components. In other embodiments, the passage 212 may be formed in the base of the rotor or stator instead of a projection, thereby flowing to form the fluid curtain from the base. In an embodiment, the fluid 216 is supplied from a fluid 214 flowing downstream through inner portions of the stator 204 and rotor 202. Portions of the fluid 214, 216 may flow radially, leaking outwardly through a cavity 314 into a flow of hot gas 218. The depicted arrangement is configured to receive the fluid 214 within the passage 212 to form a fluid curtain 308 or fluid seal between the stator 204 and rotor 202, thereby reducing leakage of fluid 214, 216 into the hot gas 218. The fluid 214, 216 may be any suitable fluid to form the fluid curtain, such as cooling fluid (e.g., air, water or other coolant) for temperature control of turbine components. As depicted, the stator 204 includes a diaphragm 220 and an airfoil 224 (or nozzle) extending from a base 222 (also referred to as a "stator base").

Forming the fluid curtain 308 between the rotor 202 and stator 204 reduces fluid leakage into the hot gas 218 enabling more work to be extracted from the hot gas 218. The fluid curtain 308 may be formed by a fluid flow from any suitable fluid source, such as the passage 212 in projection 210. As shown in FIG. 3, the passage 212 may be formed to create the fluid curtain 308 flow along a line 304 at an angle 300 with respect to a line 302 substantially perpendicular to the turbine axis 226. The angle 300 may be any suitable angle for forming the fluid curtain 308 and may be altered based on a variety of factors, such as fluid type, temperatures, geometry of cavity 314 and/or projection 210. In an embodiment, the angle 300 may range from about 5 to about 85 degrees. In another embodiment, the angle 300 may range from about 15 to about 70 degrees. In yet another embodiment, the angle 300 may range from about 20 to about 60 degrees. In another embodiment, the angle 300 may range from about -15 to about 30 degrees.

With continued reference to FIG. 3, the projection 210 and passage 212 receive the fluid 216 and form the fluid curtain 308 which flows at an angle to impinge on surface 310. In an embodiment, the flow from fluid curtain 308 then circulates within the cavity 314, as shown by flow 312, which may provide additional resistance to leakage of fluid into hot gas 218. For example, the circulating fluid flows along the periphery of the cavity 314, providing another impediment or barrier to fluid flow leaking between the rotor 202 and stator 204. As depicted, the passage 212 narrows from a first location 315 to a second location, which creates an increased flow velocity for fluid 216 as it forms the fluid curtain 308. The narrowing passage 212 has a Venturi effect to accelerate fluid flow, thereby improving formation of the fluid curtain 308.

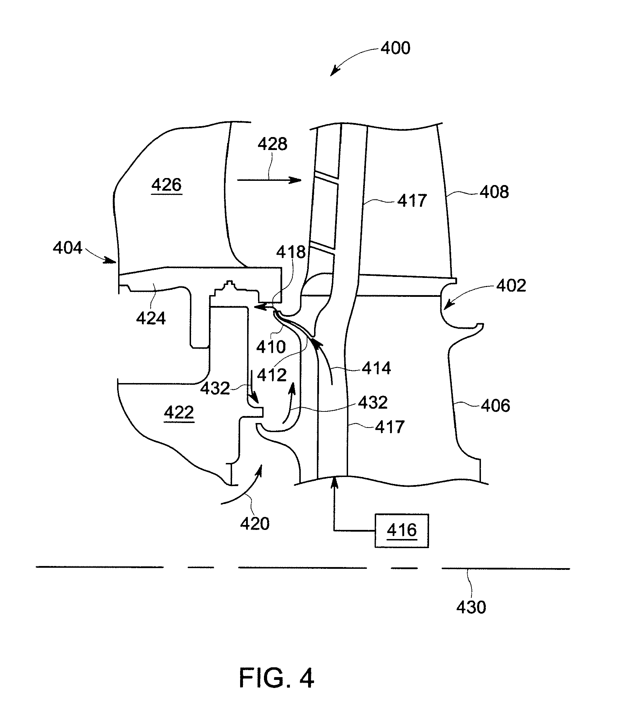

FIG. 4 is a side sectional view of another exemplary turbine assembly 400. The turbine assembly 400 includes a rotor 402 and a stator 404 disposed about an axis 430. The rotor 402 includes a base 406 with an airfoil 408 (also referred to as a "bucket") extending from the base 406. A projection 410, such as an angel wing, extends from the base 406, wherein a passage 412 for flow of a first fluid 414 is located within the projection 410. In an embodiment, the first fluid 414 is supplied from a fluid supply 416. The fluid supply 416 may be any suitable fluid supply or source to form a fluid curtain 418, such as cooling fluid flowing internally within turbine components, such as flow through the internal passage 417 to airfoil 408. The fluid supply 416 may be a dedicated coolant fluid supply such as water, air or any other suitable fluid for cooling portions of the rotor 402 and 404, such as airfoil 408. In an embodiment, a second fluid 420, such as cool air from other portions of the turbine, flows downstream to cool inner portions of the stator 404 and rotor 402. In embodiments, portions of the second fluid 420 may leak radially through a cavity or space between the rotor 402 and stator 404 into a flow of hot gas 428. The depicted arrangement is configured to receive the first fluid 414 within the passage 412 to form a fluid curtain 418 or fluid seal between the stator 404 and rotor 402, thereby reducing leakage of the second fluid 420 into the hot gas 428. As depicted, the stator 404 includes a diaphragm 422 and an airfoil 426 (or nozzle) extending from a base 424. Further, the projection 410 may be formed at an angle with respect to a line substantially perpendicular to the axis 430, thereby causing a recirculation 432 of the flow of the fluid curtain 418, further reducing leakage of the second fluid 420 into the hot gas 428. For example, the circulating fluid flows along the periphery of the cavity between rotor 402 and stator 404, providing another impediment or barrier to fluid flow leaking between the components.

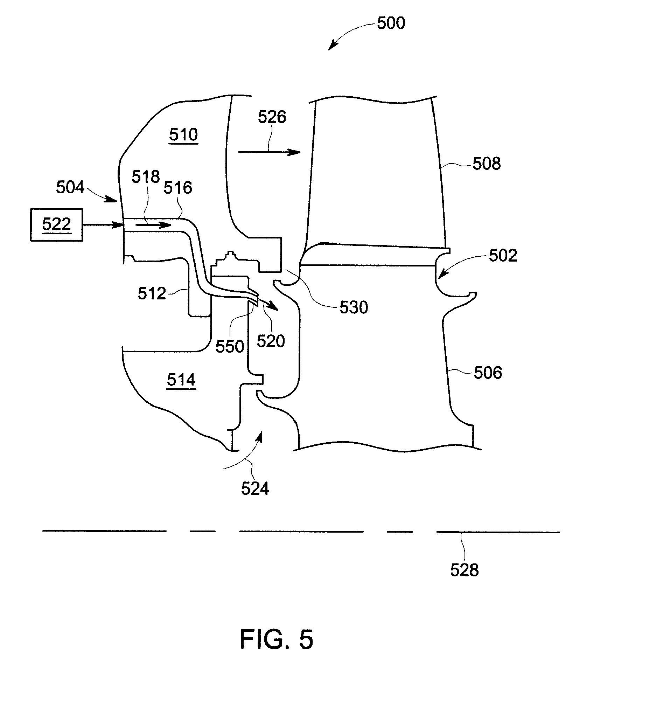

FIG. 5 is a side sectional view of another exemplary turbine assembly 500. The turbine assembly 500 includes a rotor 502 and a stator 504 disposed about an axis 528. The rotor 502 includes a base 506 with an airfoil 508 (also referred to as a "bucket") extending from the base 506. As depicted, the stator 504 includes a diaphragm 514 and an airfoil 510 (or nozzle) extending from a base 512. A passage 516 for flow of a first fluid 518 is located within the base 512 and diaphragm 514. The first fluid 518 is directed through the passage 516 in a projection 550, such as a lip, forming a fluid curtain 520 that flows across a cavity between the rotor 502 and stator 504. In an embodiment, the first fluid 518 is supplied from a fluid supply 522. The fluid supply 522 may be any suitable fluid source, such as cool fluid or air from other portions of the turbine or fluid used internally for cooling of turbine components. A second fluid 524, such as cool air from other portions of the turbine, flows downstream to cool inner portions of the stator 504 and rotor 502. In embodiments, the second fluid 524 may leak radially between the rotor 502 and stator 504 into a flow of hot gas 526. The depicted arrangement is configured to receive the first fluid 518 within the passage 516 in the projection 550 to form the fluid curtain 520 between the stator 504 and rotor 502, thereby reducing leakage of the second fluid 524 into the hot gas 526. The depicted formation of fluid curtain 520 between the rotor 502 and stator 504 provides improved performance by increasing the amount of work available to be extracted from the hot gas 526 while also providing a low maintenance seal that will not wear out over time.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A turbine assembly comprising:
a stator (204),
a rotor (202) adjacent to the stator; and
a passage formed in a projection (210) from the rotor to form a fluid curtain (308) between the rotor and stator, wherein the fluid curtain reduces a flow of fluid into a hot gas path.

2. The turbine assembly of claim 1, wherein the rotor comprises an airfoil extending from a base of the rotor and wherein the projection is disposed on the base.

3. The turbine assembly of claim 2, wherein the projection comprises an angel wing.

4. The turbine assembly of any preceding claim, wherein a cavity is formed between the base of the rotor and a base of the stator, the cavity receiving a cooling air flow and wherein the passage extends through the base of the rotor to receive the cooling air flow from the cavity to supply the flow of fluid for the fluid curtain.

5. The turbine assembly of any preceding claim, wherein the passage is supplied the flow of fluid from an internal passage within the rotor base for cooling the airfoil.

6. The turbine assembly of any preceding claim, wherein the passage comprises a narrowing passage to cause increased fluid flow velocity within the passage to form the fluid curtain.

7. The turbine assembly of any preceding claim, wherein the passage directs the flow of fluid at an angle with respect to a line substantially perpendicular to a turbine axis.

8. A method for reducing fluid flow between turbine components comprising:
flowing a hot gas across a nozzle on a stator;
flowing the hot gas across a bucket on a rotor adjacent to the stator;
flowing a cooling air flow through inner portions of the stator and rotor; and
forming a curtain of fluid between the stator and rotor to reduce leaking of the flow of cooling air into the flow of hot gas.

9. The method of claim 8, wherein forming the curtain of fluid comprises flowing a fluid from a passage in a projection disposed on the rotor.

10. The method of claim 9, wherein the projection comprises an angel wing.

11. The method of claim 9 or claim 10, wherein the passage receives the fluid from a portion of the cooling air flow.

12. The method of claim 8, wherein forming the curtain of fluid comprises flowing a fluid from a passage in a projection disposed on the stator.

13. A turbine assembly comprising:
a stator,
a rotor adjacent to the stator; and
a passage in a projection disposed on the stator to form a fluid curtain between the rotor and stator, wherein the fluid curtain reduces a flow of fluid into a hot gas path.

14. The turbine assembly of claim 13, wherein the stator comprises an airfoil extending from a base of the stator and wherein the projection extends from a diaphragm of the stator.

15. The turbine assembly of claim 13 or claim 14, wherein inner portions of the stator and rotor receive a cooling air flow and wherein the fluid curtain is formed from the cooling air flow.
